# EUROPEAN PATENT APPLICATION

(11) **EP 4 538 761 A1**
(43) Date of publication of application: **16.04.2025**
(21) Application number: 23819632.3
(22) Date of filing: 23.05.2023
(51) Int. Cl.: G02B 6/255, G02B 6/02, G02B 6/36

(54) **CONTROL DEVICE, FUSION CONNECTION DEVICE, CONNECTOR CONNECTION DEVICE, AND CONTROL PROGRAM**

(30) Priority: 08.06.2022 JP 2022093341
(71) Applicant: Fujikura Ltd., Tokyo 135-8512 (JP)
(72) Inventor: ODA, Takuya, Sakura-shi, Chiba 285-8550 (JP)
(74) Representative: Plasseraud IP
(86) International application number: PCT/JP2023/019046
(87) International publication number: WO 2023/238648

(57) **Abstract**

This invention appropriately carries out alignment of a multi-core fiber. A control device (10) includes a processor (10a). The processor (10a) executes: an identifying process of identifying positions of cores and a marker in a multi-core fiber; and an alignment process of controlling an alignment mechanism so as to carry out alignment of the multi-core fiber so that the positions of the cores and the marker in an end surface of the multi-core fiber satisfy a predetermined condition.

## Description

### Technical Field

The present invention relates to a control device and a control program each of which controls an alignment mechanism for carrying out alignment of a multi-core fiber. Further, the present invention relates to a fusion splicer and a connector connection device each including such a control device.

### Background Art

In the field of optical communications, multi-core fibers each including a plurality of cores are widely used. A document disclosing the multi-core fiber is, for example, Patent Literature 1. Multi-core fiber connected bodies each including a plurality of multi-core fibers connected to each other are also widely used.

### Citation List

### [Patent Literature]

[Patent Literature 1]
Japanese Patent Application Publication, Tokukai, No. 2019-152866

### Summary of Invention

### Technical Problem

Some of the multi-core fibers are each configured to include: a plurality of cores arranged linearly symmetrically with respect to a certain axis; and a marker formed so that a center of the marker does not overlap the certain axis. With such a marker, it is possible to uniquely identify the plurality of cores on the basis of e.g., distances from the marker.

In alignment of the multi-core fiber, it is necessary to consider a new issue which is not conventionally considered in alignment of a single-core fiber. For example, in order to connect two multi-core fibers having the same core arrangement, it is necessary to align the two multi-core fibers so that a marker of one multi-core fiber is appropriately positioned relative to a marker of the other multi-core fiber. Here, the expression "two multi-core fibers having the same core arrangement" means a state where an end surface of one multi-core fiber overlaps an end surface of the other multi-core fiber in such a manner that each of cores of the one multi-core fiber can overlap any one of cores of the other multi-core fiber. Alternatively, it is necessary to carry out alignment so that a position of a marker of a multi-core fiber is appropriately positioned relative to a key or the like of a connector part. However, there has been no technique that can appropriately carry out alignment of a multi-core fiber in consideration of the above points.

The present invention was made in consideration of the above-described problem, and has an object to realize a technique for appropriately carrying out alignment of a multi-core fiber. For example, the present invention has an object to provide a technique for carrying out alignment of a multi-core fiber so that (i) a marker of a multi-core fiber is appropriately positioned relative to a marker of another multi-core fiber or (ii) a marker of a multi-core fiber is appropriately positioned relative to a key or the like of a connector part.

### Solution to Problem

A control device in accordance with an aspect of the present invention includes: a measurement control section which identifies a position of a marker in a multi-core fiber; and an alignment control section which controls an alignment mechanism to carry out alignment of the multi-core fiber so that the position of the marker in an end surface of the multi-core fiber satisfies a predetermined condition.

### Advantageous Effects of Invention

In accordance with an aspect of the present invention, it is possible to provide a technique for appropriately carrying out alignment of a multi-core fiber. For example, it is possible to provide a technique for carrying out alignment so that (i) a marker of a multi-core fiber is appropriately positioned relative to a marker of another multi-core fiber or (ii) a marker of a multi-core fiber is appropriately positioned relative to a key or the like of a connector part.

### Brief Description of Drawings

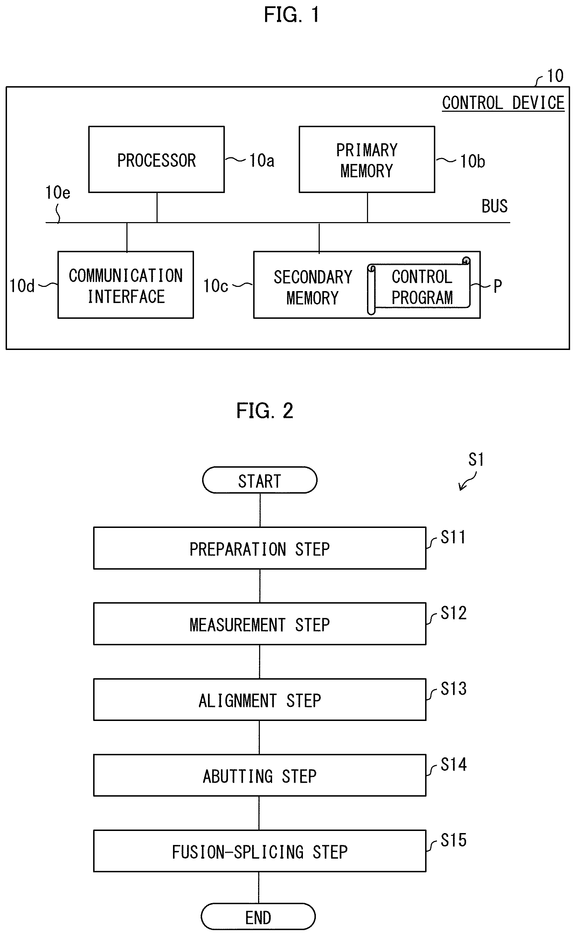

Fig. 1 is a block diagram illustrating a configuration of a control device in accordance with a first embodiment and a second embodiment of the present invention.
Fig. 2 is a flowchart illustrating a flow of a fusion-splicing method in accordance with the first embodiment.

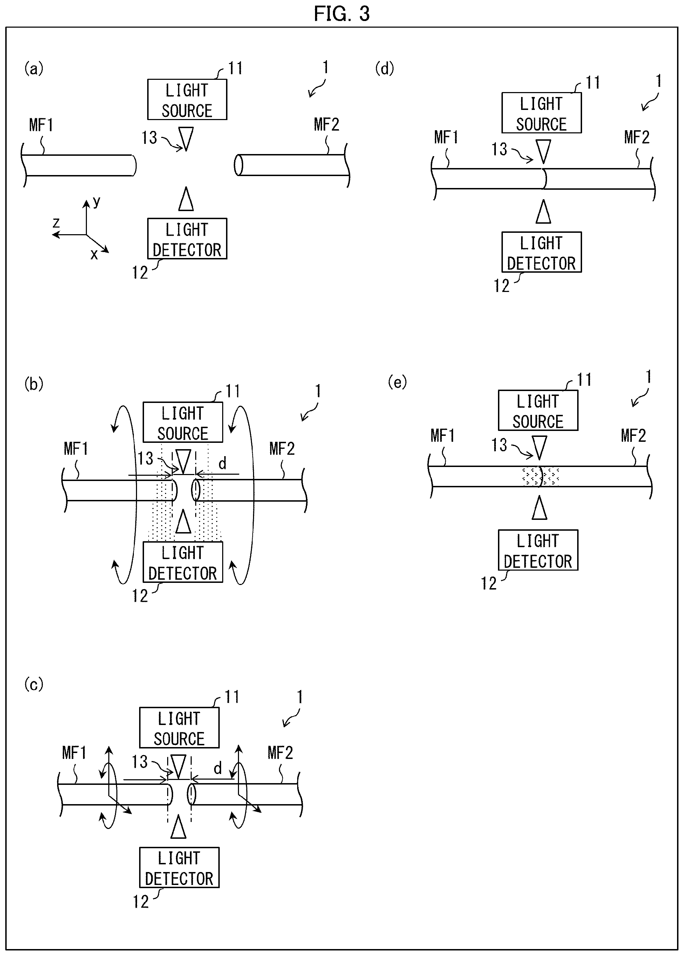

Fig. 3 is a perspective view illustrating states of a multi-core fiber in respective steps of the fusion-splicing method shown in Fig. 2.

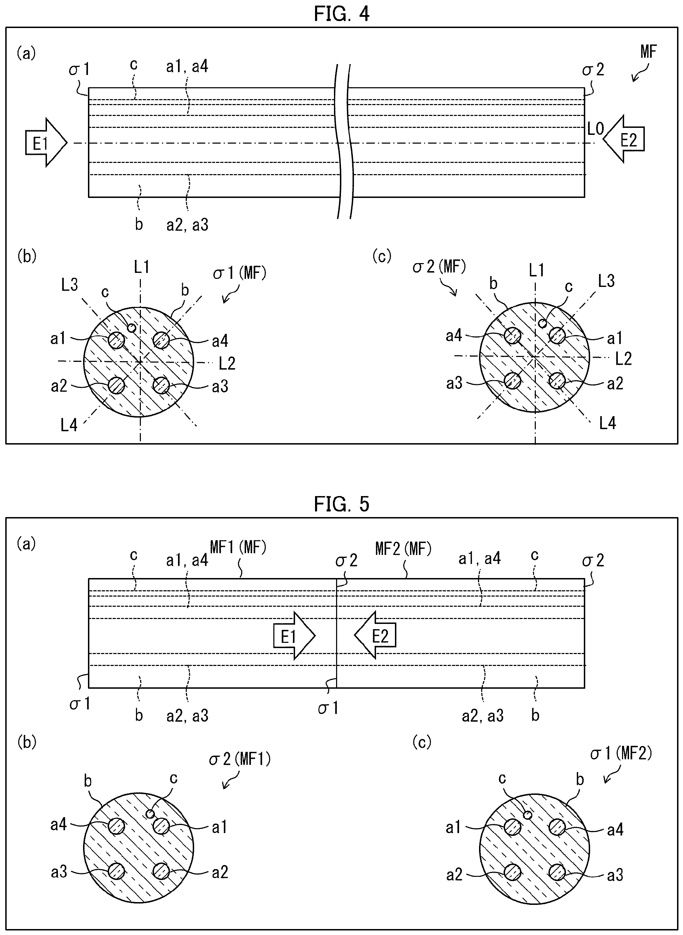

Fig. 4 is a view illustrating a multi-core fiber as an example of an optical fiber to which the fusion-splicing method shown in Fig. 1 is applied. (a) is a side view of the multi-core fiber, (b) is a front view of one end surface of the multi-core fiber viewed in a direction of a sight line E1, and (c) is a front view of the other end surface of the multi-core fiber viewed in a direction of a sight line E2.
Fig. 5 is a view illustrating a connected part of two optical fibers connected via general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

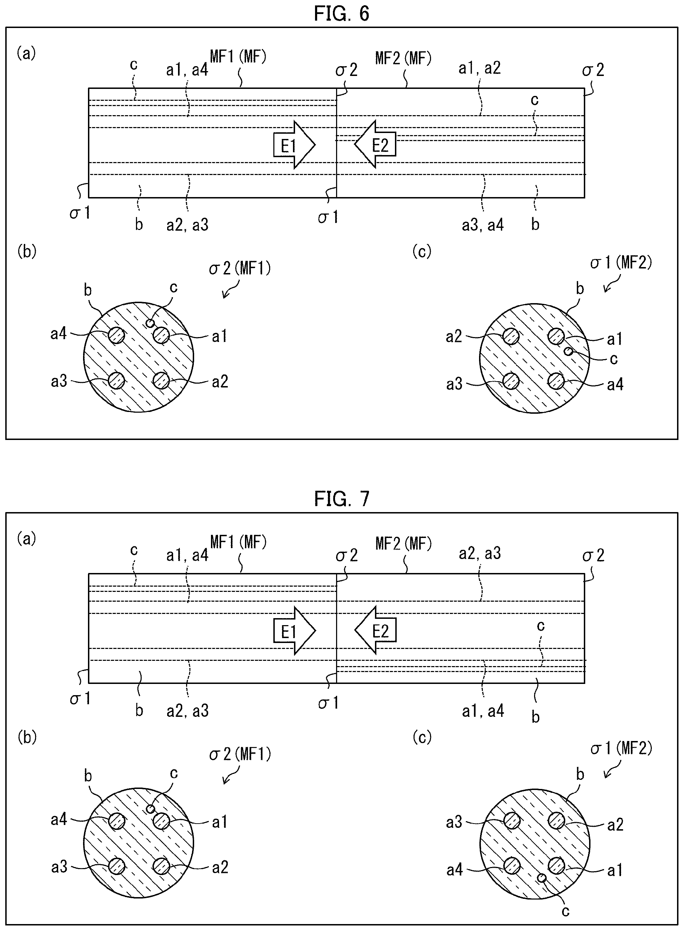

Fig. 6 is a view illustrating a fusion-spliced part of two optical fibers connected via non-general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.
Fig. 7 is a view illustrating a fusion-spliced part of two optical fibers connected via non-general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.

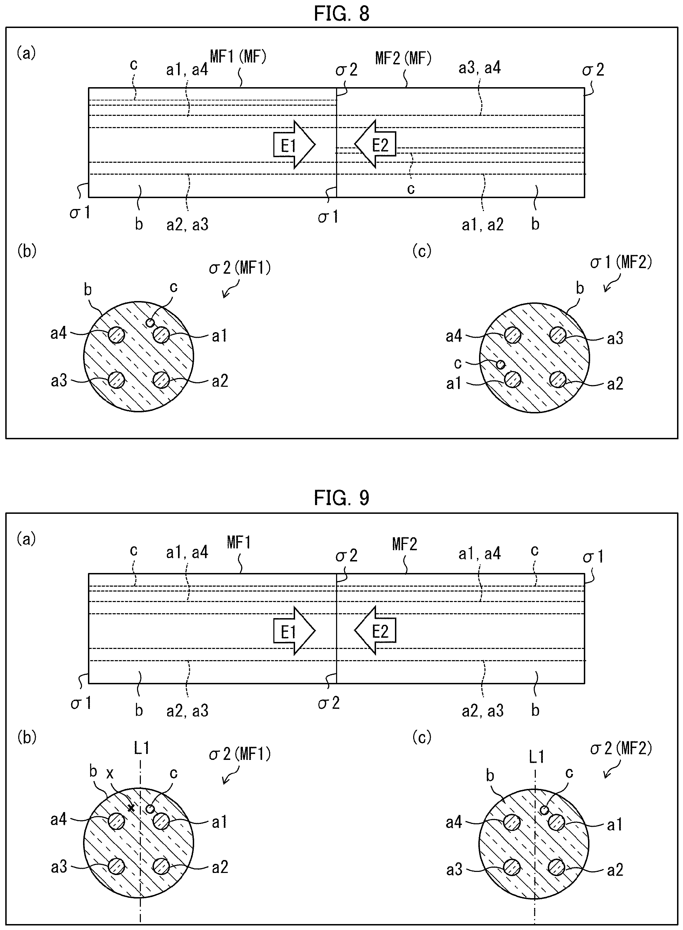

Fig. 8 is a view illustrating a fusion-spliced part of two optical fibers connected via non-general connection. (a) is a side view of the two optical fibers, (b) is a front view of one end surface of the two optical fibers viewed in a direction of a sight line E2, and (c) is a front view of the other end surface of the two optical fibers viewed in a direction of a sight line E1.
Fig. 9 is a view illustrating a fusion-spliced part of two optical fibers connected via inverted connection (inverted connection with respect to an axis L1). (a) is a side view of the two optical fibers, (b) is a front view of one end surface of the two optical fibers viewed in a direction of a sight line E2, and (c) is a front view of the other end surface of the two optical fibers viewed in a direction of a sight line E1.

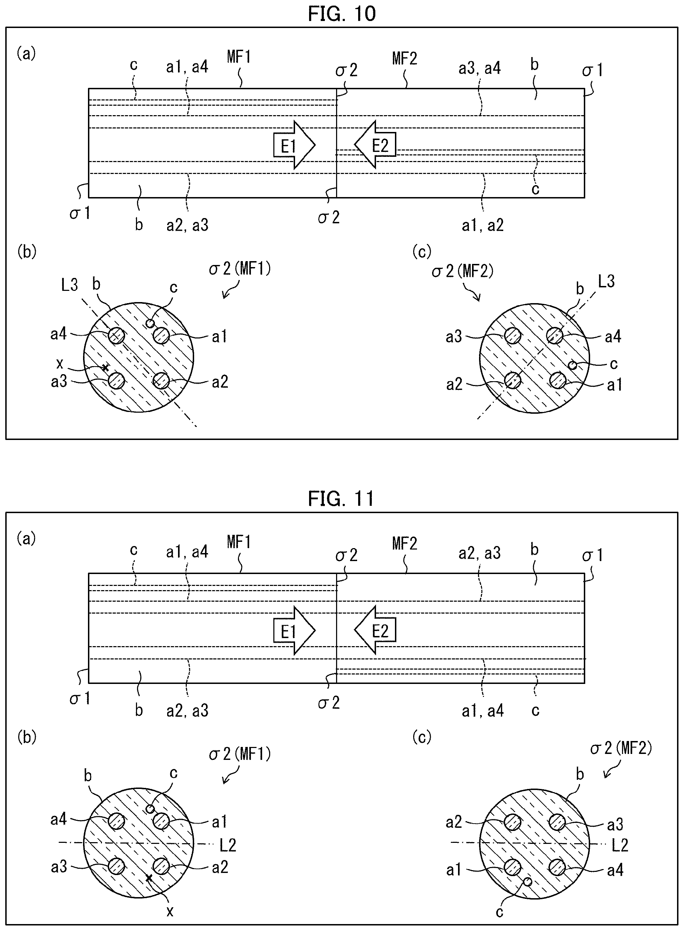

Fig. 10 is a view illustrating a fusion-spliced part of two optical fibers connected via inverted connection (inverted connection with respect to an axis L3). (a) is a side view of the two optical fibers, (b) is a front view of one end surface of the two optical fibers viewed in a direction of a sight line E2, and (c) is a front view of the other end surface of the two optical fibers viewed in a direction of a sight line E1.
Fig. 11 is a view illustrating a fusion-spliced part of two optical fibers connected via inverted connection (inverted connection with respect to an axis L2). (a) is a side view of the two optical fibers, (b) is a front view of one end surface of the two optical fibers viewed in a direction of a sight line E2, and (c) is a front view of the other end surface of the two optical fibers viewed in a direction of a sight line E1.

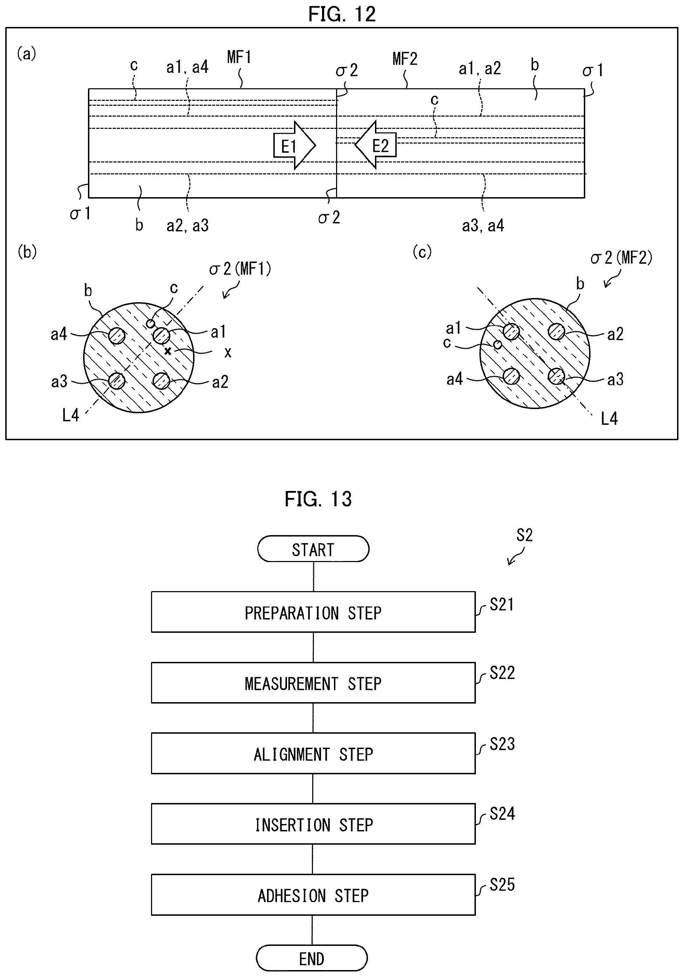

Fig. 12 is a view illustrating a fusion-spliced part of two optical fibers connected via inverted connection (inverted connection with respect to an axis L4). (a) is a side view of the two optical fibers, (b) is a front view of one end surface of the two optical fibers viewed in a direction of a sight line E2, and (c) is a front view of the other end surface of the two optical fibers viewed in a direction of a sight line E1.
Fig. 13 is a flowchart illustrating a flow of a connector connection method in accordance with a second embodiment of the present invention.

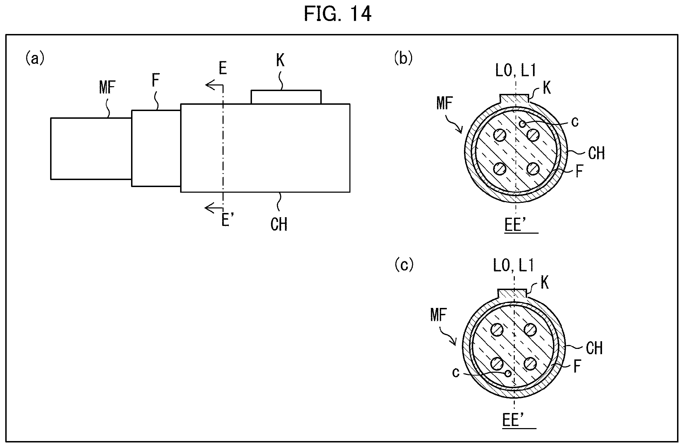

In Fig. 14, (a) is a side view of a multi-core fiber to which a connector housing is attached via a ferrule. Each of (b) and (c) is a cross-sectional view of the multi-core fiber.

### Description of Embodiments

### [First Embodiment]

### (Configuration of Control Device)

The following description will discuss, with reference to Fig. 1, a control device 10 in accordance with a first embodiment of the present invention. Fig. 1 is a block diagram illustrating a configuration of the control device 10.

As shown in Fig. 1, the control device 10 includes a processor 10a, a primary memory 10b, a secondary memory 10c, a communication interface 10d, and a bus 10e. The processor 10a, the primary memory 10b, the secondary memory 10c, and the communication interface 10d are connected to each other via the bus 10e.

The secondary memory 10c stores therein a control program P for controlling an alignment mechanism which carries out alignment of a multi-core fiber. The processor 10a loads, on the primary memory 10b, the control program P stored in the secondary memory 10c. Then, the processor 10a controls the alignment mechanism in accordance with a command included in the control program P loaded on the primary memory 10b.

Examples of a device which can be used as the processor 10a include a central processing unit (CPU). Examples of a device which can be used as the primary memory 10b include a semiconductor random access memory (RAM). Examples of a device which can be used as the secondary memory 10c include a hard disk drive (HDD).

The communication interface 10d is an interface for carrying out communication with another device via a network. The processor 10a uses the communication interface 10d to receive a detection result from the later-described light detector 12 and to transmit a control signal to the above-described alignment mechanism.

### (Flow of Fusion-Splicing Method)

The following description will discuss, with reference to Figs. 2 and 3, a flow of a fusion-splicing method S1 in accordance with the present embodiment. The fusion-splicing method S1 is a method according to which a multi-core fiber MF2 is fusion-spliced to a multi-core fiber MF1 with use of the fusion splicer 1. The multi-core fibers MF1 and MF2 are multi-core fibers having the same core arrangement. Fig. 2 is a flowchart illustrating a flow of the fusion-splicing method S1. Fig. 3 is a perspective view illustrating states of the multi-core fibers MF1 and MF2 in respective steps included in the fusion-splicing method S1. In the present embodiment, assumed as the multi-core fibers MF1 and MF2 are multi-core fibers each including a cladding, a plurality of cores formed inside the cladding, and a single marker formed inside the cladding. Specific examples of the multi-core fibers MF1 and MF2 will be described later with reference to a different drawing(s).

As shown in Fig. 2, the fusion-splicing method S1 includes a preparation step S11, a measurement step S12, an alignment step S13, an abutting step S14, and a fusion-splicing step S15. As shown in Fig. 3, the fusion splicer 1 includes a light source 11, a light detector 12, a heat source 13, the alignment mechanism (not illustrated), and the control device 10. The alignment mechanism can cause translational motion in an x-axis direction and in a y-axis direction as well as rotational motion around a z-axis of each of the multi-core fibers MF1 and MF2. The control device 10 functions as a measurement control section for carrying out the measurement step S12, an alignment control section for carrying out the alignment step S13, an abutting control section for carrying out the abutting step S14, and a fusion-splicing control section for carrying out the fusion-splicing step S15. There is no particular limitation on the heat source 13. The heat source 13 may be any mechanism, provided that it is a mechanism that heats an end of a multi-core fiber. Examples of the heat source 13 include a laser and an electrode.

The preparation step S11 is a step in which a user sets the multi-core fibers MF1 and MF2 at the fusion splicer 1. The multi-core fibers MF1 and MF2 are held by the alignment mechanism of the fusion splicer 1 so that center axes of the multi-core fibers MF1 and MF2 are in parallel with the z-axis. (a) of Fig. 3 illustrates states of the multi-core fibers MF1 and MF2 having been subjected to the preparation step S11.

When the preparation step S11 is completed, the measurement step S12 is carried out. The measurement step S12 is a step in which the fusion splicer 1 measures positions of cores and markers in the multi-core fibers MF1 and MF2 having not been subjected to fusion-splicing yet. In the measurement step S12, the processor 10a of the control device 10 controls the alignment mechanism of the fusion splicer 1 so that the multi-core fiber MF1 moves in a z-axis negative direction. Consequently, an end of the multi-core fiber MF1 is positioned at a location between the light source 11 and the light detector 12. Further, the processor 10a of the control device 10 controls the alignment mechanism of the fusion splicer 1 so that the multi-core fiber MF2 moves in a z-axis positive direction. Consequently, an end of the multi-core fiber MF2 is positioned at a location between the light source 11 and the light detector 12. As a result, a distance d between the end surface of the multi-core fiber MF1 and the end surface of the multi-core fiber MF2 is approximately 20 µm, for example. Note that the distance d may be arbitrarily set within a range allowing execution of the later-described detection process or imaging process, and is not limited to 20 pm.

Further, the processor 10a of the control device 10 detects, with use of the light detector 12, (1) an intensity I1 of light having emitted from the light source 11 and having transmitted through the end of the multi-core fiber MF1 (hereinafter, such a light intensity will be referred to as a "transmitted light intensity I1") and (2) an intensity I2 of light having emitted from the light source 11 and having transmitted through the end of the multi-core fiber MF2 (hereinafter, such a light intensity will be referred to as a "transmitted light intensity I2"). The processor 10a of the control device 10 repeatedly carries out the detection process while controlling the alignment mechanism of the fusion splicer 1 so as to cause the multi-core fibers MF1 and MF2 to rotate around the z-axis or so as to cause the light source 11 and the light detector 12 to rotate around the z-axis. Consequently, the processor 10a of the control device 10 obtains a direction dependency of the transmitted light intensity I1 of the multi-core fiber MF1 and a direction dependency of the transmitted light intensity I2 of the multi-core fiber MF2. Then, the processor 10a of the control device 10 executes an identifying process of identifying, on the basis of the direction dependency of the transmitted light intensity I1 of the multi-core fiber MF1, the positions of the cores and the marker in the multi-core fiber MF1 and identifying, on the basis of the direction dependency of the transmitted light intensity I2 of the multi-core fiber MF2, the positions of the cores and the marker in the multi-core fiber MF2. (b) of Fig. 3 shows states of the multi-core fibers MF1 and MF2 which are being subjected to the measurement step S12.

In the above-described detection process, a photodiode is assumed as the light detector 12. In this case, data indicative of transmitted light intensities I1 and I2 obtained in the detection processes is a luminance value indicative of an intensity of light detected by the photodiode. Data indicative of the direction dependencies of the transmitted light intensities I1 and I2 obtained as a result of the repeated detection processes is a one-dimensional array of luminance values indicative of the intensity of the light detected by the photodiode. Meanwhile, in a case where a camera is used as the light detector 12, the above-described detection process is constituted by an imaging process of capturing images of the ends of the multi-core fibers MF1 and MF2 and a calculation process (e.g., an integration process, an average process, or a weighted average process) for deriving transmitted light intensities I1 and I2 from the images obtained in the imaging processes. In this case, data obtained in the imaging processes is a two-dimensional array (i.e., images) of luminance values indicative of intensities of light detected by cells constituting an image sensor of the camera, and data indicative of the transmitted light intensities I1 and I2 of the multi-core fibers MF1 and MF2 obtained in the calculation processes is, for example, an integration value, an average value, or a weighted average value of the intensities of the light detected by the cells constituting the image sensor of the camera. Further, the data indicative of the direction dependencies of the transmitted light intensities I1 and I2 obtained as a result of the repeated detection processes (imaging processes and calculation processes) is a one-dimensional array of, for example, integration values, average values, and/or weighted average values of the intensities of the light detected by the cells constituting the image sensor of the camera.

When the measurement step S12 is completed, the alignment step S13 is carried out. The alignment step S13 is a step in which the fusion splicer 1 carries out alignment of the multi-core fiber MF2 with respect to the multi-core fiber MF1. In the present embodiment, references for determining the positions of the cores and marker of the multi-core fiber MF2 are the positions of the cores and marker of the multi-core fiber MF1. In the alignment step S13, the processor 10a of the control device 10 executes an alignment process of controlling the alignment mechanism of the fusion splicer 1 so as to carry out alignment of the multi-core fiber MF2 with respect to the multi-core fiber MF1 so that (i) the positions of the cores in the end surface of the multi-core fiber MF2 relative to the positions of the cores in the end surface of the multi-core fiber MF1 and (ii) the position of the marker in the end surface of the multi-core fiber MF2 relative to the position of the marker in the end surface of the multi-core fiber MF1 satisfy a predetermined condition. Here, the condition to be satisfied by the positions of the cores and the marker in the end surface of the multi-core fiber MF2 will be described later with reference to a different drawing(s). (c) of Fig. 3 illustrates states of the multi-core fibers MF1 and MF2 which are being subjected to the alignment step S13.

The present embodiment employs a configuration in which the measurement step S12 is carried out once and thereafter the alignment step S13 is carried out once. However, the present embodiment is not limited to this configuration. Alternatively, for example, the measurement step S12 and the alignment step S13 may be executed alternately and repeatedly so as to carry out the alignment work in steps.

When the alignment step S13 is completed, the abutting step S14 is carried out. The abutting step S14 is a step in which the fusion splicer 1 causes the end surface of the multi-core fiber MF1 to abut the end surface of the multi-core fiber MF2. In the abutting step S14, the processor 10a of the control device 10 controls the alignment mechanism of the fusion splicer 1 so that the multi-core fiber MF1 moves for d/2 (in the present embodiment, approximately 10 µm) in the z-axis negative direction. Further, the processor 10a of the control device 10 controls the alignment mechanism of the fusion splicer 1 so that the multi-core fiber MF2 moves for d/2 (in the present embodiment, approximately 10 µm) in the z-axis positive direction. (d) of Fig. 3 illustrates states of the multi-core fibers MF1 and MF2 which have been subjected to the abutting step S14.

Note that, in the abutting step S14, pre-discharge may be carried out. The pre-discharge is a step of softening tip ends of the multi-core fibers MF1 and MF2. By carrying out the pre-discharge and thereafter causing the tip end of the multi-core fiber MF1 to abut the tip end of the multi-core fiber MF2, it is possible to bring the tip ends of the multi-core fibers MF1 and MF2 into close contact with each other in a more reliable manner. In this case, it is preferable that an amount of movement of the multi-core fibers MF1 and MF2 be d/2+ε. The symbol "ε" denotes an amount of additional movement for causing the tip ends of optical fibers OF1 and OF2 to overlap each other, and is 10 µm, for example.

When the abutting step S14 is completed, the fusion-splicing step S15 is carried out. The fusion-splicing step S15 is a step in which the fusion splicer 1 carries out fusion-splicing of the multi-core fibers MF1 and MF2. In the fusion-splicing step S15, the processor 10a of the control device 10 controls the heat source 13 (here, an electrode) to cause arc discharge so that the ends of the multi-core fibers MF1 and MF2 are heated and melted. The ends of the multi-core fibers MF1 and MF2, having been heated and melted, are solidified by natural cooling, so that the multi-core fibers MF1 and MF2 are fusion-spliced. (e) of Fig. 3 illustrates states of the multi-core fibers MF1 and MF2 which have been subjected to the fusion-splicing step S15.

In the above-described alignment step S13, alignment may be carried out so as to achieve a high correlation coefficient (overlap integral) indicative of a degree of correlation between (i) a waveform (reference waveform) of a luminance distribution of a multi-core fiber having been already measured and (ii) a waveform of a luminance distribution of a multi-core fiber measured actually. In this case, a type of an end surface of the multi-core fiber may be determined depending on whether a peak corresponding to a marker is located leftward or rightward relative to an intermediate position between peaks corresponding to two adjacent cores. Further, in a case where the above-described alignment step S13 is achieved in an end view mode, alignment may be carried out so as to achieve a high correlation coefficient indicative of a degree of correlation between (i) an image (reference image) of an end surface of a multi-core fiber having been already imaged and (ii) an image of an end surface of a multi-core fiber measured actually. Here, the above-described waveform and correlation coefficient can be defined as a feature. That is, the control device can be configured such that: the measurement control section further identifies a position of a marker in an end surface of another multi-core fiber; and the alignment control section carries out, on the basis of a predetermined feature or a feature determined before alignment, alignment of the multi-core fiber with respect to the another multi-core fiber so that a position of a marker in an end surface of the multi-core fiber relative to the position of the marker in the end surface of the another multi-core fiber satisfies a predetermined condition.

### (Specific Example of Multi-Core Fiber)

The following will describe, with reference to Fig. 4, a specific example of two multi-core fibers MF1 and MF2. Here, two multi-core fibers MF1 and M2 having the same core arrangement and the same marker arrangement are assumed. Each of the two multi-core fibers MF1 and MF2 will be simply referred to as a multi-core fiber MF. In Fig. 4, (a) is a side view of the multi-core fiber MF, (b) is a front view of one end surface σ1 of the multi-core fiber MF viewed in a direction of a sight line E1, and (c) is a front view of the other end surface σ2 of the multi-core fiber MF viewed in a direction of a sight line E2. Note that the two multi-core fibers MF1 and MF2 having the same core arrangement and the same marker arrangement are merely one example of a subject to which the present invention is applied. For each of the two multi-core fibers MF1 and MF2, the position, the shape, and the size of the marker may arbitrarily be selected. It is not essential that the two multi-core fibers MF1 and MF2 have the same marker arrangement.

The multi-core fiber MF includes n (n is a natural number of not less than 2) cores a1 to an and a cladding b. The cladding b is a cylindrical-shape member. The cladding b is made of silica glass, for example. Each core ai (i is a natural number of not less than 1 and not more than n) is a cylindrical-shape area that is provided inside the cladding b, that has a higher refractive index than that of the cladding b, and that extends in a direction in which the cladding b extends. Each core ai is made of, for example, silica glass doped with an updopant such as germanium. The cladding b may have a columnar shape, and may have any cross-sectional shape. The cross-sectional shape of the cladding b may have a polygonal shape such as a quadrangular shape or a hexagonal shape or may have a barrel shape.

In each of the end surfaces σ1 and σ2, cores a1 to an are arranged so as to be linearly symmetrically with respect to an axis L1 which is orthogonal to a center axis L0 of the multi-core fiber MF. In each of the end surfaces σ1 and σ2, the cores a1 to an are arranged so as to avoid the axis L1. In other words, in each of the end surfaces σ1 and σ2, the cores a1 to an are arranged so as not to overlap the axis L1.

The multi-core fiber MF further includes a marker c. The marker c is a columnar-shape area that is provided inside the cladding b, that has a different refractive index from that of the cladding b, and that extends in a direction in which the cladding b extends. The marker c may have a cross-sectional shape of any shape. For example, the cross-sectional shape of the marker c may be a circular shape, a triangular shape, or a quadrangular shape. The marker c is made of, for example, silica glass doped with a downdopant such as fluorine or boron. In this case, the marker c has a refractive index lower than that of the cladding b. Alternatively, the marker c is made of silica glass doped with an updopant such as germanium, aluminum, phosphorus, or chlorine. In this case, the marker c has a refractive index higher than that of the cladding b. The marker c may be formed by, for example, a drilling process or a stack- and-draw process. Typically, an outer diameter of the marker c is smaller than an outer diameter of the core ai.

In each of the end surfaces σ1 and σ2, a center of the marker c is positioned so as to avoid the axis L1. In other words, in each of the end surfaces σ1 and σ2, the center (geometric center) of the marker c is positioned at a location that does not overlap the axis L1. Note that the marker c may be positioned so that its center does not overlap the axis L1, and a part of the marker c may overlap the axis L1.

Note that cores a1 to a4 of a multi-core fiber MF illustrated in Fig. 4 can be regarded as being arranged linearly symmetrically with respect to an axis L2, can be regarded as being arranged linearly symmetrically with respect to an axis L3, or can be regarded as being arranged linearly symmetrically with respect to an axis L4. Here, the axis L2 is an axis orthogonal both to the center axis L0 and the axis L1. Each of the axes L3 and L4 is an axis which is orthogonal to the center axis L0 and which makes an angle of 45 degrees with the axis L1.

Here, assumed as the cores a1 to an are cores a1 to a4 arranged at apexes of a square, and assumed as the linear symmetry axes are axes L1 to L4 each of which does not pass through any of the four cores a1 to a4. However, the present invention is not limited to this. The number n of the cores a1 to an may be arbitrarily set, and each of the linear symmetry axes may or may not pass through any of the cores a1 to an. For example, in a case where n is an even number, n cores a1 to an arranged at apexes of a regular n-sided polygon, n/2 linear symmetry axes each passing through opposed apexes of the regular n-sided polygon, and n/2 linear symmetry axes each passing through middle points of opposite sides of the regular n-sided polygon can be assumed. Meanwhile, in a case where n is an odd number, n cores a1 to an arranged at apexes of a regular n-sided polygon and n linear symmetry axes each passing through an apex of the regular n-sided polygon and a middle point of a side opposed to the apex can be assumed. In addition to the cores a1 to an, an additional core may be present in a center of the multi-core fiber MF (i.e., in a center of a regular n-sided polygon having apexes at which the cores a1 to an are arranged).

Further, the cores a1 to an may not be arranged at the apexes of the regular n-sided polygon. For example, a multi-core fiber MF can be assumed which is achieved by moving the cores a1 and a4 of the multi-core fiber MF shown in Fig. 4 so as to get closer to the axis L1 and moving the cores a2 and a3 of the multi-core fiber MF shown in Fig. 4 so as to be separated away from the axis L1. That is, a multi-core fiber MF whose cores a1 to a4 are arranged at apexes of an isosceles trapezoid can be assumed. In this case, the axis L1 serves as a linear symmetry axis. Meanwhile, considering two line segments which are in parallel with each other in a cross section of the multi-core fiber MF and which are away from a center of the cross section of the multi-core fiber MF at equal distances, a multi-core fiber MF can be assumed in which, among eight cores a1 to a8, four cores a1 to a4 are aligned on one of the two line segments at equal intervals and remaining four cores a5 to a8 are aligned on the other of the two line segments at equal intervals. Here, it is assumed that an interval between adjacent ones of the cores a1 to a4 is equal to an interval between adjacent ones of the cores a5 to a8. It is also assumed that two cores a1 and a5 are positioned in a single straight line, two cores a2 and a6 are positioned in a single straight line, two cores a3 and a7 are positioned in a single straight line, and two cores a4 and a8 are positioned in a single straight line, each of the straight lines extending orthogonally to the above-described two straight lines. In this case, an axis L1 which is in parallel with the above-described two straight lines and an axis L2 which is perpendicular to the above-described two straight lines serve as the linear symmetry axes.

### (Specific Example of Connected Part of Multi-Core Fibers)

The following description will discuss, with reference to Figs. 5 to 12, a specific example of a connected part of the multi-core fibers MF1 and MF2.

The multi-core fibers MF1 and MF2 are connected in a connection mode which is either of (i) different-type end surface connection in which one end surface σ1 and the other end surface σ2 are connected to each other and (ii) same-type end surface connection in which two end surfaces σ1 are connected to each other or two end surfaces σ2 are connected to each other. The different-type end surface connection includes general connection and non-general connection. Meanwhile, the same-type end surface connection includes inverted connection with respect to each of the linear symmetry axes L1 to L4 for the cores a1 to a4. The following will explain these connection modes.

Fig. 5 is a view illustrating a connected part of general connection. In Fig. 5, (a) is a side view of the multi-core fibers MF1 and MF2, (b) is a front view of an end surface σ2 of the multi-core fiber MF1 viewed in the direction of the sight line E2, and (c) is a front view of an end surface σ1 of the multi-core fiber MF2 viewed in the direction of the sight line E1. The connected part of the general connection is (i) a connected part in which the end surface σ2 of the multi-core fiber MF1 and the end surface σ1 of the multi-core fiber MF2, which are different types of end surfaces, are connected to each other or (ii) a connected part in which the end surface σ1 of the multi-core fiber MF1 and the end surface σ2 of the multi-core fiber MF2, which are different types of end surfaces, are connected to each other (the former is shown in Fig. 5). The connected part of the general connection satisfies the following condition.

Condition 1: Each of cores a1 to an in the end surface σ1 of the multi-core fiber MF2 overlaps any of cores a1 to an in the end surface σ2 of the multi-core fiber MF1. Specifically, (1) the core a1 in the end surface σ1 of the multi-core fiber MF2 overlaps the core a1 in the end surface σ2 of the multi-core fiber MF1, (2) the core a2 in the end surface σ1 of the multi-core fiber MF2 overlaps the core a2 in the end surface σ2 of the multi-core fiber MF1, (3) the core a3 in the end surface σ1 of the multi-core fiber MF2 overlaps the core a3 in the end surface σ2 of the multi-core fiber MF1, and (4) the core a4 in the end surface σ1 of the multi-core fiber MF2 overlaps the core a4 in the end surface σ2 of the multi-core fiber MF1.

Condition 2a: The marker c in the end surface σ1 of the multi-core fiber MF2 overlaps the marker c in the end surface σ2 of the multi-core fiber MF1.

Briefly speaking, the general connection is a connection mode which is the different-type end surface connection, in which the cores a1 to an are optically coupled to each other, and in which the markers c communicate with each other.

Note that only a part of the marker c of the multi-core fiber MF2 may be connected to a portion of the multi-core fiber MF1 which portion is not the marker c of the multi-core fiber MF1 or only a part of the marker c of the multi-core fiber MF1 may be connected to a portion of the multi-core fiber MF2 which portion is not the marker c of the multi-core fiber MF2. For example, in a case where this configuration is achieved by moving the markers c so as to be separated farther away from the cores a1 in the multi-core fibers MF1 and MF2, it is possible to prevent or suppress (i) deformation of the core a1 which can occur at the time of production of the multi-core fiber MF1 due to the marker c located close to the core a1 and/or (ii) characteristic deterioration which can occur during use of the multi-core fibers MF due to the marker c located close to the core a1.

The positions of the markers c in the multi-core fibers MF1 and MF2 may be determined as below.

Condition β1: In the end surface of the first multi-core fiber MF1, the marker c overlaps an imaginary perpendicular bisector of an imaginary line segment connecting a center of the core a1 closest to the marker c and a center of the core a4 second closest to the marker c, among the cores a1 to a4 in the first multi-core fiber MF1.

Condition β2: In the end surface of the second multi-core fiber MF2, the marker c overlaps an imaginary perpendicular bisector of an imaginary line segment connecting a center of the core a1 closest to the marker c and a center of the core a4 second closest to the marker c, among the cores a1 to a4 in the second multi-core fiber MF2.

If the condition β1 or the condition β2 is satisfied, the marker c can be separated farther away from at least the core a1 closest to the marker c in the first multi-core fiber MF1 and the marker c can be separated farther away from at least the core a1 closest to the marker c in the second multi-core fiber MF2. This can prevent or suppress the problem of characteristic deterioration which can occur in a case where the marker c gets closer to at least the core a1 in the first multi-core fiber MF1 and the marker c gets closer to at least the core a1 in the second multi-core fiber MF2.

The above-described condition β1 may be the later-described condition β1', and the condition β2 may be the later-described condition β2'. In this case, the marker c can be separated farther away from the cores a1 to a4 in the first multi-core fiber MF1, and the marker c can be separated farther away from the cores a1 to a4 in the second multi-core fiber MF2. This can further prevent or suppress the problem of characteristic deterioration which can occur in a case where the marker c gets closer to the cores a1 to a4 in the first multi-core fiber MF1 and the marker c gets closer to the cores a1 to a4 in the second multi-core fiber MF2.

Condition β1': In the end surface of the first multi-core fiber MF1, a center of the marker c overlaps the imaginary perpendicular bisector of the imaginary line segment connecting the center of the core a1 closest to the marker c and the center of the core a4 second closest to the marker c, among the cores a1 to a4 in the first multi-core fiber MF1. Note that, in this case, a distance between the marker c and the core a1 is equal to a distance between the marker c and the core a2. Thus, "the center of the core a1 closest to the marker c and the center of the core a4 second closest to the marker c" herein respectively refer to two cores a1 and a4 closest to the marker c. Even in a case where the distance between the marker c and the core a1 is equal to the distance between the marker c and the core a2, if the first multi-core fiber MF1 has a cross-sectional structure which is asymmetric with respect to the axis L1, the cores a1 and a2 can be identified.

Condition β2': In the end surface of the second multi-core fiber MF2, a center of the marker c overlaps the imaginary perpendicular bisector of the imaginary line segment connecting the center of the core a1 closest to the marker c and the center of the core a4 second closest to the marker c, among the cores a1 to a4 in the second multi-core fiber MF2. Note that, in this case, a distance between the marker c and the core a1 is equal to a distance between the marker c and the core a2. Thus, "the center of the core a1 closest to the marker c and the center of the core a4 second closest to the marker c" herein respectively refer to two cores a1 and a4 closest to the marker c. Even in a case where the distance between the marker c and the core a1 is equal to the distance between the marker c and the core a2, if the second multi-core fiber MF2 has a cross-sectional structure which is asymmetric with respect to the axis L1, the cores a1 and a2 can be identified.

The positions of the markers c in the multi-core fibers MF1 and MF2 may be determined so as to satisfy the following condition γ1 or γ2.

Condition γ1: In the end surface of the first multi-core fiber MF1, the center of the marker c does not overlap the imaginary perpendicular bisector of the imaginary line segment connecting the center of the core a1 closest to the marker c and the center of the core a4 second closest to the marker c, among the cores a1 to a4 in the first multi-core fiber MF1.

Condition γ2: In the end surface of the second multi-core fiber MF2, the center of the marker c does not overlap the imaginary perpendicular bisector of the imaginary line segment connecting the center of the core a1 closest to the marker c and the center of the core a4 second closest to the marker c, among the cores a1 to a4 in the second multi-core fiber MF2.

In this case, the center of the marker c of the first multi-core fiber MF1 or the center of the marker c of the second multi-core fiber MF2 is shifted from the above-described imaginary perpendicular bisector. Thus, as compared to the configuration in which the marker c of the first multi-core fiber MF1 and the marker c of the second multi-core fiber MF2 completely overlap each other and the configuration in which the center of the marker c of the first multi-core fiber MF1 and the center of the marker c of the second multi-core fiber MF2 overlap the above-described imaginary perpendicular bisector, it is easier (i) to identify the end surface of the first multi-core fiber MF1 and the end surface of the second multi-core fiber MF2 or (ii) to identify a core number of the first multi-core fiber MF1 or a core number of the second multi-core fiber MF2. This can make it easier to connect the first multi-core fiber MF1 or the second multi-core fiber MF2 with an external transceiver or an external fan-in/fan-out device.

Assuming that each of the multi-core fibers MF1 and MF2 is the multi-core fiber MF illustrated in Fig. 4, a connection mode in which the end surface σ2 of the multi-core fiber MF1 and the end surface σ1 of the multi-core fiber MF2 are connected to each other can be, instead of general connection, a connection mode illustrated in Fig. 6, a connection mode illustrated in Fig. 7, or a connection mode illustrated in Fig. 8.

Fig. 6 illustrates a connection mode in which the core a1 of the multi-core fiber MF1 is connected to the core a2 of the multi-core fiber MF2. In Fig. 6, (a) is a side view of the multi-core fibers MF1 and MF2, (b) is a front view of the end surface σ2 of the multi-core fiber MF1 viewed in the direction of the sight line E2, and (c) is a front view of the end surface σ1 of the multi-core fiber MF2 viewed in the direction of the sight line E1.

Fig. 7 illustrates a connection mode in which the core a1 of the multi-core fiber MF1 is connected to the core a3 of the multi-core fiber MF2. In Fig. 7, (a) is a side view of the multi-core fibers MF1 and MF2, (b) is a front view of the end surface σ2 of the multi-core fiber MF1 viewed in the direction of the sight line E2, and (c) is a front view of the end surface σ1 of the multi-core fiber MF2 viewed in the direction of the sight line E1.

Fig. 8 illustrates a connection mode in which the core a1 of the multi-core fiber MF1 is connected to the core a4 of the multi-core fiber MF2. In Fig. 8, (a) is a side view of the multi-core fibers MF1 and MF2, (b) is a front view of the end surface σ2 of the multi-core fiber MF1 viewed in the direction of the sight line E2, and (c) is a front view of the end surface σ1 of the multi-core fiber MF2 viewed in the direction of the sight line E1.

Each of the connection modes illustrated in Figs. 6 to 8 satisfies the condition 1, but does not satisfy the condition 2a. Thus, each of the connection modes illustrated in Figs. 6 to 8 is called non-general connection, rather than general connection.

Fig. 9 is a view illustrating a connected part of inverted connection. In Fig. 9, (a) is a side view of the multi-core fibers MF1 and MF2, (b) is a front view of the end surface σ2 of the multi-core fiber MF1 viewed in the direction of the sight line E2, and (c) is a front view of the end surface σ2 of the multi-core fiber MF2 viewed in the direction of the sight line E1. The connected part of the inverted connection is (i) a connected part in which the end surface σ2 of the multi-core fiber MF1 and the end surface σ2 of the multi-core fiber MF2, which are the same type of end surfaces, are connected to each other or (ii) a connected part in which the end surface σ1 of the multi-core fiber MF1 and the end surface σ1 of the multi-core fiber MF2, which are the same type of end surfaces, are connected to each other (the former is shown in Fig. 9). The connected part of the inverted connection satisfies the following condition.

Condition 1: Each of the cores a1 to an in the end surface σ2 of the multi-core fiber MF2 overlaps any of the cores a1 to an in the end surface σ2 of the multi-core fiber MF1. Specifically, (1) the core a1 in the end surface σ2 of the multi-core fiber MF2 overlaps the core a4 in the end surface σ2 of the multi-core fiber MF1, (2) the core a2 in the end surface σ2 of the multi-core fiber MF2 overlaps the core a3 in the end surface σ2 of the multi-core fiber MF1, (3) the core a3 in the end surface σ2 of the multi-core fiber MF2 overlaps the core a2 in the end surface σ2 of the multi-core fiber MF1, and (4) the core a4 in the end surface σ2 of the multi-core fiber MF2 overlaps the core a1 in the end surface σ2 of the multi-core fiber MF1.

Condition 2b: The marker c in the end surface σ2 of the multi-core fiber MF2 overlaps an area x that is linearly symmetric to the marker c of the multi-core fiber MF1 with respect to the axis L1 in the end surface σ2 of the multi-core fiber MF1.

Briefly speaking, the inverted connection is a connection mode which is the same-type end surface connection, in which the cores a1 to an are optically coupled to each other, and in which the markers c do not communicate with each other.

Assuming that each of the multi-core fibers MF1 and MF2 is the multi-core fiber MF illustrated in Fig. 4, a connection mode in which the end surface σ2 of the multi-core fiber MF1 and the end surface σ2 of the multi-core fiber MF2 are connected to each other can be, instead of inverted connection illustrated in Fig. 9, a connection mode illustrated in Fig. 10, a connection mode illustrated in Fig. 11, or a connection mode illustrated in Fig. 12.

Fig. 10 illustrates a connection mode in which the core a1 of the multi-core fiber MF1 is connected to the core a3 of the multi-core fiber MF2. In Fig. 10, (a) is a side view of the multi-core fibers MF1 and MF2, (b) is a front view of the end surface σ2 of the multi-core fiber MF1 viewed in the direction of the sight line E2, and (c) is a front view of the end surface σ1 of the multi-core fiber MF2 viewed in the direction of the sight line E1. The connection mode illustrated in Fig. 10 satisfies the condition 1, and satisfies the condition 2b when the axis L1 is replaced with the axis L3. Thus, the connection mode illustrated in Fig. 9 is called inverted connection with respect to the axis L3.

Fig. 11 illustrates a connection mode in which the core a1 of the multi-core fiber MF1 is connected to the core a2 of the multi-core fiber MF2. In Fig. 11, (a) is a side view of the multi-core fibers MF1 and MF2, (b) is a front view of the end surface σ2 of the multi-core fiber MF1 viewed in the direction of the sight line E2, and (c) is a front view of the end surface σ1 of the multi-core fiber MF2 viewed in the direction of the sight line E1. The connection mode illustrated in Fig. 11 satisfies the condition 1, and satisfies the condition 2b when the axis L1 is replaced with the axis L2. Thus, the connection mode illustrated in Fig. 11 is called inverted connection with respect to the axis L2.

Fig. 12 illustrates a connection mode in which the core a1 of the multi-core fiber MF1 is connected to the core a1 of the multi-core fiber MF2. In Fig. 12, (a) is a side view of the multi-core fibers MF1 and MF2, (b) is a front view of the end surface σ2 of the multi-core fiber MF1 viewed in the direction of the sight line E2, and (c) is a front view of the end surface σ1 of the multi-core fiber MF2 viewed in the direction of the sight line E1. The connection mode illustrated in Fig. 12 satisfies the condition 1, and satisfies the condition 2b when the axis L1 is replaced with the axis L4. Thus, the connection mode illustrated in Fig. 12 is called inverted connection with respect to the axis L4.

### (Predetermined Condition)

As described above, in the alignment step S13, the processor 10a of the control device 10 carries out alignment of the multi-core fibers MF1 and MF2 so that the positions of the cores and the marker in the multi-core fiber MF2 relative to the positions of the cores and the marker in the multi-core fiber MF1 satisfy a "predetermined condition".

In the present embodiment, the above-described condition 1 is considered as the "predetermined condition" which should be satisfied by the positions of the cores in the multi-core fiber MF2 relative to the positions of the cores in the multi-core fiber MF1. In this case, as a relation between the position of the marker in the multi-core fiber MF2 and the position of the marker in the multi-core fiber MF1, the following eight positional relations can be considered.

Relation 1: A positional relation between the marker c of the multi-core fiber MF1 and the marker c of the multi-core fiber MF2 occurring in the connection mode (general connection) illustrated in Fig. 5. That is, a positional relation in which the center of the marker c of the multi-core fiber MF1 coincides with the position of the center of the marker c of the multi-core fiber MF2.

Relation 2: A positional relation between the marker c of the multi-core fiber MF1 and the marker c of the multi-core fiber MF2 occurring in the connection mode (non-general connection) illustrated in Fig. 6.

Relation 3: A positional relation between the marker c of the multi-core fiber MF1 and the marker c of the multi-core fiber MF2 occurring in the connection mode (non-general connection) illustrated in Fig. 7.

Relation 4: A positional relation between the marker c of the multi-core fiber MF1 and the marker c of the multi-core fiber MF2 occurring in the connection mode (non-general connection) illustrated in Fig. 8.

Note that each of Relations 2 to 4 can be expressed as a positional relation in which one of the multi-core fibers MF1 and MF2 connected via general connection is rotated by i × 360°/4 (i = 1, 2, 3). Typically, in a case where the cores a1 to an in the multi-core fibers MF1 and MF2 have m-fold symmetry, there exist, as non-general connection, m-1 connection modes in each of which one of the multi-core fibers MF1 and MF2 connected via general connection is rotated by i × 360°/m (i = 1, 2, ..., m-1).

Relation 5: A positional relation between the marker c of the multi-core fiber MF1 and the marker c of the multi-core fiber MF2 occurring in the connection mode (inverted connection with respect to the axis L1) illustrated in Fig. 9.

Relation 6: A positional relation between the marker c of the multi-core fiber MF1 and the marker c of the multi-core fiber MF2 occurring in the connection mode (inverted connection with respect to the axis L3) illustrated in Fig. 10.

Relation 7: A positional relation between the marker c of the multi-core fiber MF1 and the marker c of the multi-core fiber MF2 occurring in the connection mode (inverted connection with respect to the axis L2) illustrated in Fig. 11.

Relation 8: A positional relation between the marker c of the multi-core fiber MF1 and the marker c of the multi-core fiber MF2 occurring in the connection mode (inverted connection with respect to the axis L4) illustrated in Fig. 12.

Note that each of Relations 6 to 8 can be expressed as a positional relation in which one of the multi-core fibers MF1 and MF2 connected via inverted connection with respect to the axis L1 is rotated by i × 360°/4 (i = 1, 2, 3). Typically, in a case where the cores a1 to an in the multi-core fibers MF1 and MF2 have m-fold symmetry, there exist, as another inverted connection, m-1 connection modes in each of which one of the multi-core fibers MF1 and MF2 connected via inverted connection is rotated by i × 360°/m (i = 1, 2, ..., m-1).

Each of Relations 1 to 5 can be expressed as a relation in which, among pairs of two cores selected from the cores a1 to a4 of the multi-core fiber MF1, a pair of the core a1 closest to the marker c and the core a4 second closest to the marker c is connected to, among pairs of two cores selected from the cores a1 to a4 of the multi-core fiber MF2, a pair of the core a1 closest to the marker c and the core a4 second closest to the marker c. In this case, the effect of reducing crosstalk between the cores can be attained intensively in the pair of the core a1 closest to the marker c and the core a4 second closest to the marker c. Meanwhile, each of Relations 2 to 4 and 6 to 8 can be expressed as a relation in which, among pairs of two cores selected from the cores a1 to a4 of the multi-core fiber MF1, a pair of the core a1 closest to the marker c and the core a4 second closest to the marker c is connected to, among pairs of two cores selected from the cores a1 to a4 of the multi-core fiber MF2, a pair other than the pair of the core a1 closest to the marker c and the core a4 second closest to the marker c. In this case, the effect of reducing crosstalk between the cores can be attained dispersedly.

In the present embodiment, with regard to the different-type end surface connection, Relation 1 is considered as the "predetermined condition" which should be satisfied by the position of the marker in the multi-core fiber MF2 relative to the position of the marker in the multi-core fiber MF1. Further, in the present embodiment, with regard to the same-type end surface connection, each of Relations 5 to 8 is considered as the "predetermined condition" which should be satisfied by the position of the marker in the multi-core fiber MF2 relative to the position of the marker in the multi-core fiber MF1. With this, it is possible to obtain a multi-core fiber connected body given by general connection or inverted connection.

Note that the control device 10 may use, as the "predetermined condition" which should be satisfied by the position of the marker in the multi-core fiber MF2 relative to the position of the marker in the multi-core fiber MF1, a relation designated by a user. Alternatively, the control device 10 may use, as the "predetermined condition" which should be satisfied by the position of the marker in the multi-core fiber MF2 relative to the position of the marker in the multi-core fiber MF1, a relation automatically selected by the control device 10. The control device 10 can automatically select, from among Relations 1 to 8, the "predetermined condition" in the following manner, for example.

That is, the control device 10 (alignment control section) determines, on the basis of the positions of the cores and the markers in the multi-core fibers MF1 and MF2 measured in the measurement step S12, whether each of connection target surfaces of the multi-core fibers MF1 and MF2 is the end surface σ1 or the end surface σ2. In a case where (i) both the connection target surfaces of the multi-core fibers MF1 and MF2 are the end surfaces σ1 or (ii) both the connection target surfaces of the multi-core fibers MF1 and MF2 are the end surfaces σ2, the control device 10 determines that connection to be conducted is the same-type end surface connection. Meanwhile, in a case where one of the connection target surfaces of the multi-core fibers MF1 and MF2 is the end surface σ1 and the other of the connection target surfaces of the multi-core fibers MF1 and MF2 is the end surface σ2, the control device 10 determines that connection to be conducted is the different-type end surface connection. In a case where connection to be conducted is the same-type end surface connection, the control device 10 selects Relation 1 as the "predetermined condition". Meanwhile, in a case where connection to be conducted is the different-type end surface connection, the control device 10 selects any one of Relations 5 to 8 as the "predetermined condition". Note that which of Relations 5 to 8 is to be selected when connection to be conducted is the different-type end surface connection may be determined in advance or may be determined on the basis of an instruction from a user.

Note that the position of the marker c can vary depending on the production lot or the manufacturer. Even in such a case, if the cores a1 to a4 which are identified by distances from the marker c in the end surface σ2 of the first multi-core fiber MF1 and the end surface σ1 of the second multi-core fiber MF2 are connected in the manner shown in Fig. 5, this connection is regarded as general connection. Meanwhile, if the cores a1 to a4 which are identified by distances from the marker c in the end surface σ2 of the first multi-core fiber MF1 and the end surface σ1 of the second multi-core fiber MF2 are connected in any of the manners shown in Figs. 9 to 12, this connection is regarded as inverted connection.

The alignment may be carried out so as to satisfy the following condition η when the one end surface of the first multi-core fiber MF1 is caused to abut the one end surface of the second multi-core fiber MF2.

Condition η: In the one end surface of the first multi-core fiber MF1 or the one end surface of the second multi-core fiber MF2, an imaginary straight line connecting the center of the marker c of the first multi-core fiber MF1 and the center of the marker c of the second multi-core fiber MF2 is in parallel with (i) an imaginary straight line connecting, in the end surface of the first multi-core fiber MF1, the center of the core a1 closest to the marker c of the first multi-core fiber MF1 and the center of the core a4 second closest to the marker c of the first multi-core fiber MF1 or (ii) an imaginary straight line connecting, in the end surface of the second multi-core fiber MF2, the center of the core a1 closest to the marker c of the second multi-core fiber MF2 and the center of the core a4 second closest to the marker c of the second multi-core fiber MF2.

In this case, it is easier (i) to identify the end surface of the first multi-core fiber MF1 and the end surface of the second multi-core fiber MF2 or (ii) to identify a core number of the first multi-core fiber MF1 or a core number of the second multi-core fiber MF2, similarly to the above-discussed effect. This can make it easier to connect the first multi-core fiber MF1 or the second multi-core fiber MF2 with an external transceiver or an external fan-in/fan-out device. Furthermore, as compared to the configuration in which the two imaginary straight lines connecting the markers c are not in parallel, at least one of the two markers c can occasionally be separated from an outer circumference of the cladding b. Thus, it is possible to bring about an effect of preventing or suppressing (i) an increase in thickness of the cladding b or (ii) deformation of the cladding b that may otherwise occur at the time of production and/or the like.

The alignment may be carried out so as to satisfy the following condition δ1 or δ2 when the one end surface of the first multi-core fiber MF1 is caused to abut the one end surface of the second multi-core fiber MF2.

Condition δ1: A whole of the marker c in the second multi-core fiber MF2 is connected to a part (e.g., the cladding b of the first multi-core fiber MF1) of the first multi-core fiber MF1 which part is not the marker c of the first multi-core fiber MF1.

Condition δ2: A whole of the marker c in the first multi-core fiber MF1 is connected to a part (e.g., the cladding b of the second multi-core fiber MF2) of the second multi-core fiber MF2 which part is not the marker c of the second multi-core fiber MF2.

As compared to the configuration in which the marker c, which has a relatively small area, of the first multi-core fiber MF1 is connected to the marker c, which has a relatively small area, of the second multi-core fiber MF2 or the configuration in which the marker c of the first multi-core fiber MF1 is connected to an area laying over the marker c and the cladding b of the second multi-core fiber MF2, a configuration in which the marker c of the first multi-core fiber MF1 is connected only to the cladding b, which has a relatively large area, of the second multi-core fiber MF2 can reduce (relieve) a stress applied to the marker c of the first multi-core fiber MF1. This can prevent or suppress a damage of the marker c of the first multi-core fiber MF1. This applies also to the marker c of the second multi-core fiber MF2.

The alignment may be carried out so as to satisfy the following condition ε1 or ε2 when the one end surface of the first multi-core fiber MF1 is caused to abut the one end surface of the second multi-core fiber MF2.

Condition ε1: The alignment is carried out such that, in the end surface of the first multi-core fiber MF1, the center of the marker c of the second multi-core fiber MF2 is connected to an area (hereinafter, also referred to as an "area B") which is located inside (1) an imaginary circumscribed circle that is circumscribed on, among the plurality of cores a1 to a4 in the first multi-core fiber MF1, the core a1 closest to the marker c and the core a4 second closest to the marker c and that has a center at the center of the cladding b of the first multi-core fiber MF1, which is interposed by (2) an imaginary bisector of an angle made by an imaginary straight line passing through the center of the core a1 closest to the marker c and the center of the core a4 second closest the marker c and an imaginary straight line passing through the center of the core a1 and the center of the cladding b and (3) an imaginary bisector of an angle made by an imaginary straight line passing through the center of the core a1 and the center of the core a4 and an imaginary straight line connecting the center of the core a4 and the center of the cladding b, and which includes the cores a1 and a4.

Condition ε2: The alignment is carried out such that, in the end surface of the second multi-core fiber MF2, the center of the marker c of the first multi-core fiber MF1 is connected to an area (hereinafter, also referred to as an "area C") which is located inside (1) an imaginary circumscribed circle that is circumscribed on, among the plurality of cores a1 to a4 in the second multi-core fiber MF2, the core a1 closest to the marker c and the core a4 second closest to the marker c and that has a center at the center of the cladding b of the second multi-core fiber MF2, which is interposed by (2) an imaginary bisector of an angle made by an imaginary straight line passing through the center of the core a1 closest to the marker c and the center of the core a4 second closest the marker c and an imaginary straight line passing through the center of the core a1 and the center of the cladding b and (3) an imaginary bisector of an angle made by an imaginary straight line passing through the center of the core a1 and the center of the core a4 and an imaginary straight line connecting the center of the core a4 and the center of the cladding b, and which includes the cores a1 and a4.

In this case, the first multi-core fiber MF1 can bring about both the former effect and the latter effect discussed above. Particularly, as compared to a configuration satisfying the later-described condition ζ1 or ζ2, the marker c of the second multi-core fiber MF2 is disposed at a location separated from an outer circumference of the cladding b. Thus, it is possible to prevent or suppress an increase in thickness of the cladding b or deformation of the cladding b which may otherwise occur at the time of production. This can further increase, particularly, the latter effect. This applies also to the second multi-core fiber MF2.

The alignment may be carried out so as to satisfy the following condition ζ1 or ζ2 when the one end surface of the first multi-core fiber MF1 is caused to abut the one end surface of the second multi-core fiber MF2.

Condition ζ1: The alignment is carried out such that, in the end surface of the first multi-core fiber MF1, the center of the marker c of the second multi-core fiber MF2 is connected to an area (hereinafter, also referred to as an "area D") which is located outside (1) an imaginary circumscribed circle that is circumscribed on, among the plurality of cores a1 to a4 in the first multi-core fiber MF1, the core a1 closest to the marker c and the core a4 second closest to the marker c and that has a center at the center of the cladding b of the first multi-core fiber MF1, which is interposed by (2) an imaginary bisector of an angle made by an imaginary straight line passing through the center of the core a1 closest to the marker c and the center of the core a4 second closest the marker c and an imaginary straight line passing through the center of the core a1 and the center of the cladding b, (3) an imaginary bisector of an angle made by an imaginary straight line passing through the center of the core a1 and the center of the core a4 and an imaginary straight line connecting the center of the core a4 and the center of the cladding b, and which includes the cores a1 and a4, and (4) an outer circumference of the cladding b, and which is in contact with the cores a1 and a4.

Condition ζ2: The alignment is carried out such that, in the end surface of the second multi-core fiber MF2, the center of the marker c of the first multi-core fiber MF1 is connected to an area (hereinafter, also referred to as an "area E") which is interposed by (1) an imaginary circumscribed circle that is circumscribed on, among the plurality of cores a1 to a4 in the second multi-core fiber MF2, the core a1 closest to the marker c and the core a4 second closest to the marker c and that has a center at the center of the cladding b of the second multi-core fiber MF2, (2) an imaginary bisector of an angle made by an imaginary straight line passing through the center of the core a1 closest to the marker c and the center of the core a4 second closest the marker c and an imaginary straight line passing through the center of the core a1 and the center of the cladding b, (3) an imaginary bisector of an angle made by an imaginary straight line passing through the center of the core a1 and the center of the core a4 and an imaginary straight line connecting the center of the core a4 and the center of the cladding b, and (4) an outer circumference of the cladding b, and which is in contact with the cores a1 and a4.

In this case, the first multi-core fiber MF1 can bring about both the former effect and the latter effect discussed above. Particularly, as compared to a configuration satisfying the condition ε1 or ε2, the marker c of the second multi-core fiber MF2 is disposed at a location separated from the core a1 or a4. This makes it possible to prevent or suppress deformation of the core a1 or a4. This can further increase, particularly, the former effect. This applies also to the second multi-core fiber MF2.

With regard to the condition ε1, ε2, ζ1, or ζ2, any of the following configurations can be employed for the end surface of the first multi-core fiber MF1: a configuration (hereinafter, also referred to as "Configuration 1") in which at least a part of the marker c of the second multi-core fiber MF2 is connected to the area B or D; a configuration (hereinafter, also referred to as "Configuration 2") in which the whole of the marker c of the second multi-core fiber MF2 is connected to the area B or D; and a configuration (hereinafter, also referred to as "Configuration 3") in which at least a part of the marker c of the second multi-core fiber MF2 is connected so as to lay across a boundary between the areas B and D. With any of the configurations 1 to 3, it is possible to attain the former and latter effects. However, as compared to Configuration 2 in which the whole of the marker c is connected to the area D and Configuration 3, Configuration 2 in which the whole of the marker c of the second multi-core fiber MF2 is connected to the area B is configured such that the marker c of the second multi-core fiber MF2 is connected to a location more separated from the outer circumference of the cladding b and thus can increase, particularly, the latter effect. Meanwhile, as compared to Configuration 2 in which the whole of the marker c of the second multi-core fiber MF2 is connected to the area B and Configuration 3, Configuration 2 in which the whole of the marker c of the second multi-core fiber MF2 is connected to the area D is configured such that the marker c of the second multi-core fiber MF2 is connected to a location more separated from the core a1 or a4 and thus can increase, particularly, the former effect. Meanwhile, as compared to Configuration 2, Configuration 3 is configured such that the marker c of the second multi-core fiber MF2 is connected to a location more separated from the outer circumference of the cladding b and the core a1 or a4 and thus can bring about the former and latter effects in a balanced manner. Similarly, any of the following configurations can be employed for the end surface of the second multi-core fiber MF2: a configuration in which at least a part of the marker c of the first multi-core fiber MF1 is connected to the area C or E; a configuration in which the whole of the marker c of the first multi-core fiber MF1 is connected to the area C or E; or a configuration in which at least a part of the marker c is connected to a boundary between the areas C and E. The effects obtained in these configurations are similar to the above-discussed effects given by the first multi-core fiber MF1.

The alignment may be carried out such that, in both end surfaces of a multi-core fiber connected body obtained by connecting the multi-core fibers MF1 and MF2, the cores used for input of an optical signal are disposed so as to be diagonal to each other and the cores used for output of an optical signal are disposed so as to be diagonal to each other. In this case, it is possible to reduce (i) crosstalk between the cores used for input of an optical signal and (ii) crosstalk between the cores used for output of an optical signal.

In order to sequentially carry out fusion-splicing two or more times to produce a multi-core fiber connected body made of three or more multi-core fibers MF, the fusion splicer 1 may store a fusion-spliced state (fusion-splicing condition) every time fusion-splicing is carried out and may determine a fusion-spliced state of p-th fusion-splicing by referring to a fusion-spliced state(s) of up to p-1th fusion-splicing. Further, in order to produce the multi-core fiber connected body made of three or more multi-core fibers MF, a connection condition may be set in advance and each fusion-splicing may be carried out according to the connection condition.

The fusion splicer 1 may connect multi-core fibers MF1, MF2, and MF3 satisfying the conditions A1 and A2 so as to satisfy the condition B, thereby producing a multi-core fiber connected body including multi-core fibers MF1, MF2, and MF3 connected in this order.

Condition A1: Each of the number of cores in the multi-core fiber MF1 and the number of cores in the multi-core fiber MF3 is n (n is a natural number of not less than 2).

Condition A2: (1) Ordinal numbers of the cores in the multi-core fiber MF1 can be identified according to an arrangement order of the cores such that a core closest to the marker c is a first core and a core second closest to the marker c is a second core, (2) ordinal numbers of the cores in the multi-core fiber MF2 can be identified according to an arrangement order of the cores such that a core closest to the marker c is a first core and a core second closest to the marker c is a second core, and (3) ordinal numbers of the cores in the multi-core fiber MF3 can be identified according to an arrangement order of the cores such that a core closest to the marker c is a first core and a core second closest to the marker c is a second core.

Condition B: An i-th core (i is a natural number of not less than one and not more than n) in the multi-core fiber MF3 is connected to, among the plurality of cores in the multi-core fiber MF2, a core connected to an i-th core in the multi-core fiber MF1.

With the above configuration, it is possible to produce a multi-core fiber connected body in which cores in one end surface are connected to cores in the other end surface which cores have the same ordinal numbers as those of the cores in the one end surface.

Further, the fusion splicer 1 may produce a multi-core fiber connected body by connecting L multi-core fibers in such a manner as to satisfy the following condition C1.

Condition C1: L-1 connected parts include an even number of connected parts of inverted connection.

According to the above configuration, if a multi-core fiber connected body has both end surfaces in which numbers are given to cores according to distances from a marker and an even number of connected parts thereof employ inverted connection satisfying the same relation, it is possible to produce a multi-core fiber connected body in which cores in one end surface are connected to cores in the other end surface which cores have the same numbers as those of the cores in the one end surface. Even in a case where there exist connected parts of inverted connection satisfying different relations, it is possible to attain similar effects, provided that the number of connected parts of inverted connection satisfying each of the relations is an even number. For example, in a case where the number of connected parts of inverted connection satisfying Relation 5 is two, the number of connected parts of inverted connection satisfying Relation 6 is 0, the number of connected parts of inverted connection satisfying Relation 7 is six, and the number of connected parts of inverted connection satisfying Relation 8 is four, it is possible to attain similar effects.

Further, the fusion splicer 1 may produce a multi-core fiber connected body by connecting L multi-core fibers so as to satisfy the following condition C2.

Condition C2: L-1 connected parts include an odd number of connected parts of inverted connection.

According to the above configuration, if a multi-core fiber connected body has both end surfaces in which numbers are given to cores according to distances from a marker, it is possible to produce a multi-core fiber connected body in which cores in one end surface are connected to cores in the other end surface which cores have different numbers from those of the cores in the one end surface. For example, it is possible to produce a multi-core fiber connected body in which a first core in one end surface is connected to a second core in the other end surface and a second core in the one end surface is connected to a first core in the other end surface.

### [Second Embodiment]

The above description has discussed the embodiment in which the multi-core fiber MF2 is connected to the multi-core fiber MF1. However, the present invention is not limited to this. For example, the present invention encompasses an embodiment in which a multi-core fiber MF is connected to a connector housing CH. The following description will discuss the embodiment in which the multi-core fiber MF is connected to the connector housing CH. A control device in accordance with the present embodiment is configured similarly to the control device 10 in accordance with the first embodiment. Therefore, a description thereof will be omitted.

### (Flow of Connector Connection Method)

The following description will discuss, with reference to Fig. 13, a flow of a connector connection method S2 in accordance with the present embodiment. The connector connection method S2 is a method for adhering a multi-core fiber MF2 to a connector C with use of a connector connection device. Fig. 13 is a flowchart illustrating a flow of the connector connection method S2. In the present embodiment, assumed as the multi-core fiber MF is a multi-core fiber including a cladding, a plurality of cores formed inside the cladding, and a single marker formed inside the cladding. A specific example of the multi-core fiber MF is similar to that discussed in the first embodiment.

As shown in Fig. 13, the connector connection method S2 includes a preparation step S21, a measurement step S22, an alignment step S23, an insertion step S24, and an adhesion step S25. The connector connection device is a device which connects a connector part to a multi-core fiber, and includes a light source, a light detector, an alignment mechanism, a holding mechanism (a mechanism for holding a connector part or a multi-core fiber), and a control device 10. The alignment mechanism can cause translational motion in an x-axis direction and in a y-axis direction as well as rotational motion around a z-axis of the multi-core fiber MF. The control device 10 functions as a measurement control section for carrying out the measurement step S22, an alignment control section for carrying out the alignment step S23, an insertion control section for carrying out the insertion step S24, and an adhesion control section for carrying out the adhesion step S25.

The preparation step S21 is a step of setting, at the alignment mechanism, a multi-core fiber MF from which coating at an end thereof has been removed. The multi-core fiber MF is held by the alignment mechanism so that a center axis of the multi-core fiber MF is in parallel with a z-axis.

When the preparation step S21 is completed, the measurement step S22 is carried out. The measurement step S22 is a step of measuring positions of cores and a marker in the multi-core fiber MF. In the measurement step S22, a processor 10a of the control device 10 controls the alignment mechanism so that the multi-core fiber MF moves in a z-axis negative direction. Consequently, an end of the multi-core fiber MF is positioned at a location between the light source and the light detector. Further, the processor 10a of the control device 10 detects, with use of the light detector, (1) an intensity I of light having emitted from the light source and having transmitted through the end of the multi-core fiber MF1 (hereinafter, such a light intensity will be referred to as a "transmitted light intensity I"). The processor 10a of the control device 10 repeatedly carries out the detection process while controlling the alignment mechanism so as to cause the light source and the light detector to rotate around the z-axis. Consequently, the processor 10a of the control device 10 obtains a direction dependency of the transmitted light intensity of the multi-core fiber MF. Then, the processor 10a of the control device 10 executes an identifying process of identifying, on the basis of the direction dependency of the transmitted light intensity I of the multi-core fiber MF, the positions of the cores and the marker in the multi-core fiber MF.

When the measurement step S22 is completed, the alignment step S23 is carried out. The alignment step S23 is a step in which the connector connection device carries out alignment of the multi-core fiber with respect to the connector housing CH. In the present embodiment, a reference for determining the positions of the cores and the marker of the multi-core fiber MF is the position of a key of the connector housing CH. In the alignment step S23, the processor 10a of the control device 10 executes an alignment process of controlling the alignment mechanism to carry out alignment of the multi-core fiber MF with respect to the connector housing CH so that the positions of the cores and the marker in the end surface of the multi-core fiber MF with respect to the position of the key of the connector housing CH satisfies a predetermined condition. Here, the condition to be satisfied by the positions of the cores and the marker in the end surface of the multi-core fiber MF will be described later with reference to a different drawing(s).

The present embodiment employs a configuration in which the measurement step S22 is carried out once and thereafter the alignment step S23 is carried out once. However, the present embodiment is not limited to this configuration. Alternatively, for example, the measurement step S22 and the alignment step S23 may be executed alternately and repeatedly so as to carry out the alignment work in steps.

When the alignment step S23 is completed, the insertion step S24 is carried out. The insertion step S24 is a step of attaching a ferrule to the end of the multi-core fiber MF from which the coating has been removed and then inserting, into the connector housing CH, the end of the multi-core fiber MF which end has the ferrule attached thereto. In the insertion step S24, the processor 10a of the control device 10 controls, for example, the alignment mechanism so that the multi-core fiber MF moves in the z-axis direction for inserting the end of the multi-core fiber MF into the connector housing CH.

When the insertion step S24 is completed, the adhesion step S25 is carried out. The adhesion step S25 is a step of adhering the end of the multi-core fiber MF to the connector housing. The adhesion step S25 may be carried out by a user or by the processor 10a of the control device 10 controlling a syringe.

The description here has dealt with the flow of the process in which the ferrule is attached to the multi-core fiber MF having been subjected to alignment. However, the present invention is not limited to this. Alternatively, the ferrule may be attached to the multi-core fiber MF having not been subjected to alignment yet. In this case, the above-described side-view-mode measurement method cannot be used to identify the positions of the cores and the marker. Therefore, an end-view-mode measurement method is used to identify the positions of the cores and the marker. Instead of the configuration in which the multi-core fiber MF having the ferrule attached thereto is attached to the connector housing, a configuration in which a multi-core fiber MF is inserted into a connector housing having a ferrule attached thereto may be employed.

The description here has dealt with the configuration in which the position of the key of the connector housing is used as the reference for alignment of the multi-core fiber MF. However, the present invention is not limited to this. In a case where a ferrule has a key formed therein, alignment of the multi-core fiber MF may be carried out by using the key as a reference. In a case where a jig for fixing the connector and/or the ferrule has a key formed therein, alignment of the multi-core fiber MF may be carried out by using the key as a reference. Alignment of the multi-core fiber MF with respect to a fiber holder may be carried out by using, as a reference, a position of a key of the fiber holder. In this case, a user can fix, to the connector housing, the multi-core fiber MF fixed to the fiber holder so that the position of the key of the fiber holder coincides with the position of the key of the connector housing. In a case where alignment of the multi-core fiber MF with respect to the ferrule may be carried out by using other means than the above-described key, the alignment may be carried out in the following manner. The alignment of the multi-core fiber MF may be carried out so that, when a production device is placed on a flat surface so that a holding mechanism holding the ferrule and a holding mechanism holding MCF face each other, a relation between (i) a ferrule reference plane corresponding to the key position used to connect the connector housing to the ferrule and (ii) the marker of the multi-core fiber MF becomes appropriate. Thus, assuming that the connector housing CH and the ferrule are collectively defined as a connector part, the control device can be configured such that the alignment control section carries out alignment of the multi-core fiber with respect to the connector part on the basis of a predetermined reference or a reference determined before the alignment so that the position of the marker of the multi-core fiber relative to the position of the key of the connector housing satisfies a predetermined condition.

### (Predetermined Condition)

As discussed above, in the alignment step S23, the processor 10a of the control device 10 carries out alignment of the multi-core fiber MF so that the positions of the cores and the marker in the multi-core fiber MF relative to the position of the key of the connector housing CH satisfies a "predetermined condition". The "predetermined condition" will be explained with reference to Fig. 14. In Fig. 14, (a) is a side view of a multi-core fiber MF to which a connector housing CH is attached via a ferrule F, and each of (b) and (c) is a crosssectional view of the multi-core fiber MF.

In the present embodiment, considered as the "predetermined condition" to be satisfied by the positions of the cores in the multi-core fiber MF relative to the position of the key of the connector housing CH is a condition that a symmetry axis L1 of the cores in the end surface of the multi-core fiber MF overlaps an axis line L0 of the connector housing CH, the axis line L0 being determined on the basis of the position of the key K of the connector housing CH. Here, the axis line L0 determined on the basis of the position of the key K of the connector housing CH refers to, among axis lines of the connector housing CH in a cross section orthogonal to an insertion direction of the multi-core fiber MF, an axis line passing through a center of the key K, for example.

In this case, a positional relation between the key K of the connector housing CH and the marker C of the multi-core fiber MF can be (i) Relation 1 in which the marker c is closer to the key K than in Relation 2 (as shown in (b) of Fig. 14) and (ii) Relation 2 in which the marker c is farther from the key K than in Relation 1 (as shown in (c) of Fig. 14).

In the present embodiment, Relation 1 or 2 is considered as the "predetermined condition" to be satisfied by the position of the marker in the multi-core fiber MF relative to the position of the key of the connector housing CH. By making all the multi-core fibers have the same relation of the position of the marker in each multi-core fiber MF relative to the position of the key of the connector housing CH, it is possible to connect two multi-core fibers MF via either of the above-described general connection and inverted connection merely by aligning the positions of the keys of the two multi-core fibers MF, even without carrying out measurement of the positions of the markers.

Aspects of the present invention can also be expressed as follows:
A control device in accordance with a first aspect of the present invention includes: a measurement control section which identifies a position of a marker in a multi-core fiber; and an alignment control section which controls an alignment mechanism to carry out alignment of the multi-core fiber so that the position of the marker in an end surface of the multi-core fiber satisfies a predetermined condition.

A control device in accordance with a second aspect of the present invention is configured such that, in the control device in accordance with the first aspect, the measurement control section further identifies a position of a marker in an end surface of another multi-core fiber; and the alignment control section carries out alignment of the multi-core fiber with respect to the another multi-core fiber so that the position of the marker in the end surface of the multi-core fiber relative to the position of the marker in the end surface of the another multi-core fiber satisfies a predetermined condition.

A control device in accordance with a third aspect of the present invention is configured such that, in the control device in accordance with the second aspect, the alignment control section carries out alignment of the multi-core fiber with respect to the another multi-core fiber so that the multi-core fiber and the another multi-core fiber are connected to each other via general connection.

A control device in accordance with a fourth aspect is configured such that, in the control device in accordance with the second aspect, the alignment control section carries out alignment of the multi-core fiber with respect to the another multi-core fiber so that the multi-core fiber and the another multi-core fiber are connected to each other via inverted connection.

A control device in accordance with a fifth aspect of the present invention is configured such that, in the control device in accordance with the second aspect, the alignment control section determines whether connection to be conducted between the multi-core fiber and the another multi-core fiber is same-type end surface connection or different-type end surface connection; in a case where the alignment control section determines that the connection to be conducted between the multi-core fiber and the another multi-core fiber is the same-type end surface connection, the alignment control section carries out alignment of the multi-core fiber with respect to the another multi-core fiber so that the multi-core fiber and the another multi-core fiber are connected to each other via the general connection; and in a case where the alignment control section determines that the connection to be conducted between the multi-core fiber and the another multi-core fiber is the different-type end surface connection, the alignment control section carries out alignment of the multi-core fiber with respect to the another multi-core fiber so that the multi-core fiber and the another multi-core fiber are connected to each other via the inverted connection.

A control device in accordance with a sixth aspect of the present invention is configured such that, in the control device in accordance with the second aspect, the alignment control section carries out alignment of the multi-core fiber with respect a the connector housing so that the position of the marker in the multi-core fiber with respect to a position of a key of the connector housing satisfies a predetermined condition.

A control device in accordance with a seventh aspect of the present invention is configured such that, in the control device in accordance with the sixth aspect, the alignment control section carries out alignment of the multi-core fiber with respect to the connector housing so that a symmetry axis of cores in the end surface of the multi-core fiber overlaps an axis line of the connector housing which axis line is determined on a basis of the position of the key.

A control device in accordance with an eighth aspect of the present invention is configured such that, in the control device in accordance with the seventh aspect, the alignment control section carries out alignment of the multi-core fiber with respect to the connector housing so that the marker in the end surface of the multi-core fiber is positioned at a side closer to the key.

A fusion splicer in accordance with a ninth aspect of the present invention includes: a control device according to any one of the second to fourth aspects; and the alignment mechanism.

A connector connection device in accordance with a tenth aspect of the present invention includes: a control device according to any one of the sixth to eighth aspects; and the alignment mechanism.

A control program in accordance with an eleventh aspect of the present invention is a control program for causing a computer to operate as the control device according to any one of the first to eighth aspects, the control program causing the computer to function as the measurement control section and the alignment control section.

### (Supplementary Note)

The present invention is not limited to the embodiments, but can be altered by a skilled person in the art within the scope of the claims. The present invention also encompasses, in its technical scope, any embodiment derived by combining technical means disclosed in differing embodiments.

In the description of the foregoing embodiments, various controls of the control device 10 are realized by software. However, the present invention is not limited to this. The parts of the control device 10 may be realized by software as discussed above or by hardware such as an electric circuit.

### Reference Signs List

- 10:: control device
- 10a:: processor
- 10b:: primary memory
- 10c:: secondary memory
- 10d:: communication interface
- 10e:: bus
- P:: control program

## Claims

1. A control device comprising:
a measurement control section which identifies a position of a marker in a multi-core fiber; and
an alignment control section which controls an alignment mechanism to carry out alignment of the multi-core fiber so that the position of the marker in an end surface of the multi-core fiber satisfies a predetermined condition.

2. The control device according to claim 1, wherein:
the measurement control section further identifies a position of a marker in an end surface of another multi-core fiber; and
the alignment control section carries out alignment of the multi-core fiber with respect to the another multi-core fiber so that the position of the marker in the end surface of the multi-core fiber relative to the position of the marker in the end surface of the another multi-core fiber satisfies a predetermined condition.

3. The control device according to claim 2, wherein:
the alignment control section carries out alignment of the multi-core fiber with respect to the another multi-core fiber so that the multi-core fiber and the another multi-core fiber are connected to each other via general connection.

4. The control device according to claim 2, wherein:
the alignment control section carries out alignment of the multi-core fiber with respect to the another multi-core fiber so that the multi-core fiber and the another multi-core fiber are connected to each other via inverted connection.

5. The control device according to claim 2, wherein:
the alignment control section determines whether connection to be conducted between the multi-core fiber and the another multi-core fiber is same-type end surface connection or different-type end surface connection;
in a case where the alignment control section determines that the connection to be conducted between the multi-core fiber and the another multi-core fiber is the same-type end surface connection, the alignment control section carries out alignment of the multi-core fiber with respect to the another multi-core fiber so that the multi-core fiber and the another multi-core fiber are connected to each other via the general connection; and
in a case where the alignment control section determines that the connection to be conducted between the multi-core fiber and the another multi-core fiber is the different-type end surface connection, the alignment control section carries out alignment of the multi-core fiber with respect to the another multi-core fiber so that the multi-core fiber and the another multi-core fiber are connected to each other via the inverted connection.

6. The control device according to claim 1, wherein:
the alignment control section carries out alignment of the multi-core fiber with respect to a connector housing so that the position of the marker in the multi-core fiber with respect to a position of a key of the connector housing satisfies a predetermined condition.

7. The control device according to claim 6, wherein:
the alignment control section carries out alignment of the multi-core fiber with respect to the connector housing so that a symmetry axis of cores in the end surface of the multi-core fiber overlaps an axis line of the connector housing which axis line is determined on a basis of the position of the key.

8. The control device according to claim 7, wherein:
the alignment control section carries out alignment of the multi-core fiber with respect to the connector housing so that the marker in the end surface of the multi-core fiber is positioned at a side closer to the key.

9. A fusion splicer comprising:
a control device recited in any one of claims 2 to 4; and
the alignment mechanism.

10. A connector connection device comprising:
a control device recited in any one of claims 6 to 8; and
the alignment mechanism.

11. A control program for causing a computer to operate as a control device recited in any one of claims 1 to 8, the control program causing the computer to function as the measurement control section and the alignment control section.
